# EUROPÄISCHE PATENTSCHRIFT

(11) **EP 0 550 822 B1**
(45) Veröffentlichungstag und Bekanntmachung des Hinweises auf die Patenterteilung: **22.03.1995**
(21) Anmeldenummer: 92119941.0
(22) Anmeldetag: 24.11.1992
(51) Int. Cl.: B60B 35/02, B60B 37/10, B60T 1/06, B60G 3/14

(54) **Torsionsfederachse**
Torsion bar shaft
Axe à barre de torsion

(30) Priorität: 08.01.1992 DE 9200137 U
(43) Veröffentlichungstag der Anmeldung: 14.07.1993
(73) Patentinhaber: BPW FAHRZEUGTECHNIK GmbH & CO. KG, 33104 Paderborn (DE)
(72) Erfinder: Mannstein, Gerhard, W-4790 Paderborn (DE); Becker, Friedhelm, Dipl.-Ing.(FH), W-5982 Neuenrade 4 (DE)
(74) Vertreter: Stenger, Watzke & Ring Patentanwälte

(56) Entgegenhaltungen:
- EP-A- 0 020 204
- DE-C- 1 189 392
- DE-U- 9 011 496
- US-A- 4 917 529
- 'Die Gestaltung von Walzlagern' 3. Juni 1987 , FAG KUGELFISCHER GEORG SCHÄFER KGAA, Schweinfurt, DE
- G. REITOR ET AL. 'Grundlagen des Konstruierens' 1977 , GIRARDET , ESSEN DE

## Beschreibung

Gegenstand der Erfindung ist eine Torsionsfederachse für Anhängerfahrzeuge mit einem an einem Achsrohr schwenkbar gelagerten Lenker für ein Rad, wobei in einem Lagerauge des Lenkers ein Achsschenkel für ein Wälzlager mit darauf gelagerter Trommelnabe und zum Befestigen eines Bremsträgerschildes befestigt und auf dem freien Ende des Achsschenkels eine Radmutter zur axialen Fixierung dieser Bauteile angeordnet ist.

Eine Torsionsfederachse der vorstehend beschriebenen Gattung ist aus der DE-U-90 11 496 bekannt. Bei dieser bekannten Torsionsfederachse ist das Bremsträgerschild auf dem Radlagerbolzen drehbar geführt und gemeinsam mit dem Radlagerbolzen mittels einer Schraubverbindung am Radschwinghebel befestigt und gegen Drehung fixiert. Dabei erfolgt die Fixierung zwischen einem am Radlagerbolzen angeformten Bund und einer in dem Radschwinghebel befestigten Nabe mittels einer Verzahnung. Bei dieser bekannten Torsionsfederachse sind zwei Schraubverbindungen vorgesehen, nämlich eine Radmutter auf dem äußeren freien Ende des Achsschenkels zum Verspannen des Wälzlagers mit der darauf gelagerten Trommelnabe und am inneren Ende des Achsschenkels eine weitere Verschraubung zur Fixierung am Lenker. Außer der dadurch bedingten Vermehrung der Konstruktionsteile sind Montage und Demontage auch entsprechend zeitraubend.

Davon ausgehend liegt der Erfindung die **Aufgabe** zugrunde, eine einfach konstruierte Torsionsfederachse zu schaffen, bei der das Wälzlager mit der Trommelnabe und das Bremsträgerschild nur mit einer Verschraubung auf dem drehfest im Lenker befestigten Achsschenkel axial fixiert sind.

Als technische **Lösung** wird dafür vorgeschlagen, daß der Achsschenkel mit einem Preßsitz in ein Lagerauge des Lenkers eingedrückt und am Kopf mit einer Abflachung gegen einen Vorsprung am Lenker gegen Drehung fixiert ist, daß zwischen dem Wälzlager und dem Bremsträgerschild eine Distanzhülse angeordnet ist und daß das Bremsträgerschild mit Bohrungen auf Zapfen des Lenkers gegen Drehung fixiert ist.

Bei einer erfindungsgemäß ausgebildeten Torsionsfederachse ist der Achsschenkel ohne Verwendung weiterer Konstruktionsteile unmittelbar in einem Auge des Lenkers befestigt, und zwar ohne eine Schweißverbindung. Diese Verbindungsart hat den **Vorteil,** daß sie mechanisiert werden kann und nicht von Hand vorgenommen werden muß. Das Wälzlager und die Trommelnabe werden zusammen mit dem Bremsträgerschild und der dazwischen liegenden Distanzhülse auf den Achsschenkel geschoben und mit der Radmutter gegen den Lenker verspannt. Dabei kann eine Fixierung des Bremsträgerschildes in der richtigen Lage zum Lenker mit Bohrungen vorgenommen werden, die bei der Montage auf am Lenker angeformte Zapfen geschoben werden.

Eine weitere Vereinfachung der Montage ist dadurch möglich, daß im Bremsträgerschild drei um einen Winkel von 120° gegeneinander versetzte Bohrungen angeordnet sind. Dadurch ist das Bremsträgerschild sowohl für eine Montage auf der linken als auch auf der rechten Seite der Torsionsfederachse geeignet. Die Lage der beiden Zapfen an den Lenkern beiderseits des Vorsprunges kann dann gleich bleiben.

Eine weitere Vereinfachung und Verminderung der Konstruktionsteile wird mit einer Radmutter erzielt, die einen angeformten Bund hat, dessen Außendurchmesser größer ist als der Innendurchmesser des Wälzlagers, so daß eine Überlappung mit dem Wälzlager entsteht.

Weitere Einzelheiten und Vorteile ergeben sich aus der nachfolgenden Beschreibung der zugehörigen Zeichnungen, in denen eine bevorzugte Ausführungsform einer erfindungsgemäß ausgebildeten Torsionsfederachse in Schnitten und Ansichten dargestellt worden ist. In den Zeichnungen zeigen:

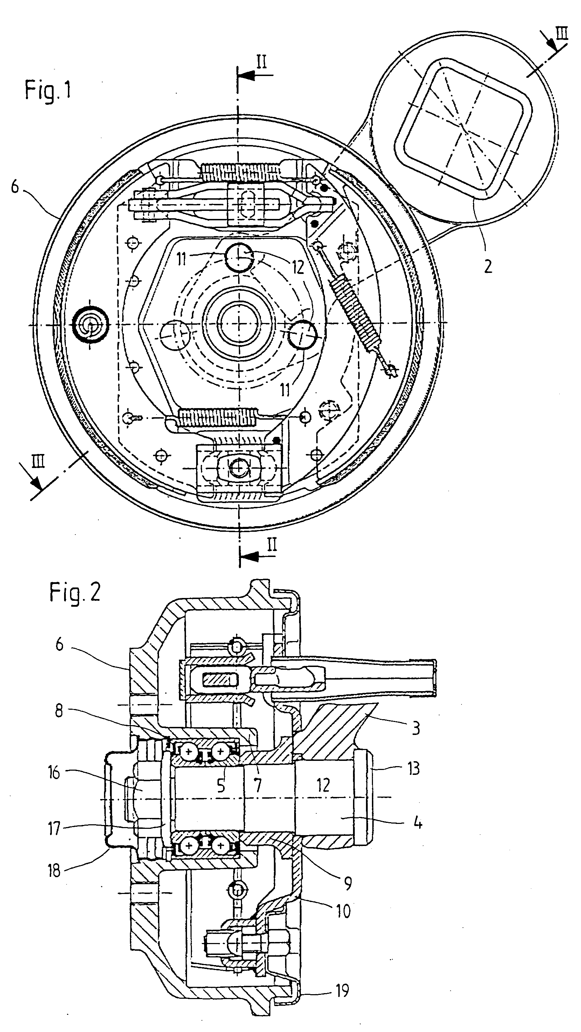

- Fig. 1: eine Radaufhängung einer Torsionsfederachse in Ansicht von der Innenseite her;
- Fig. 2: dieselbe Radaufhängung entlang der Linie II-II in Fig. 1 geschnitten in Seitenansicht;

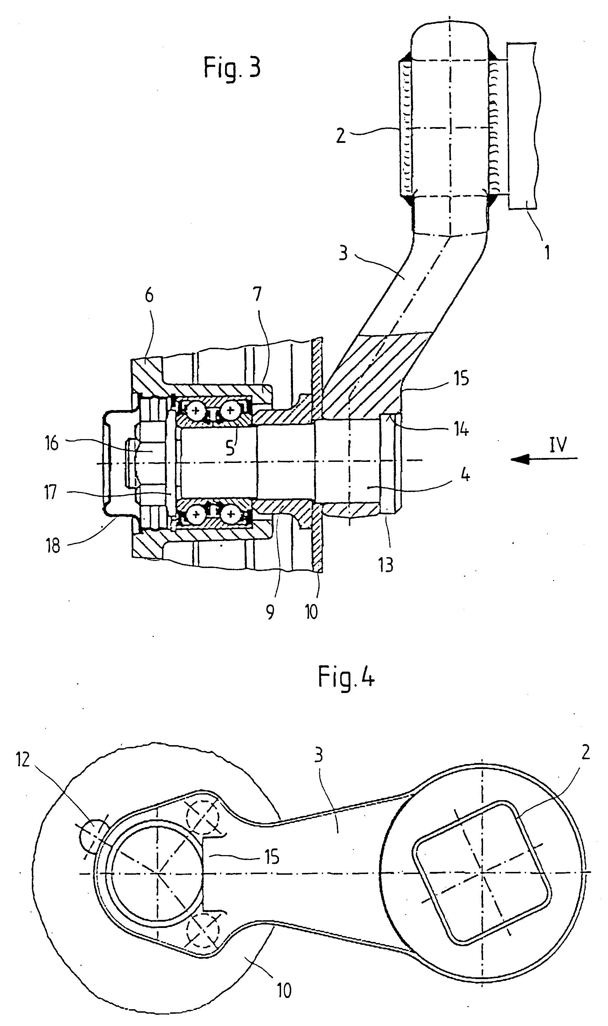

- Fig. 3: einen Teilausschnitt derselben Radaufhängung entlang der Linie III-III in Fig. 1 geschnitten in Seitenansicht;
- Fig. 4: denselben Teilausschnitt gemäß Fig. 3 in Richtung des Pfeiles IV in Fig. 3 gesehen.

In jedem Ende einer Torsionsfederachse 1 ist beispielsweise unter Zwischenlage - nicht dargestellter - Gummikörper ein Führungsrohr 2 begrenzt drehbeweglich angeordnet. Auf dem Führungsrohr 2 ist ein Lenker 3 befestigt. In einem Auge des Lenkers 3 ist ein Achsschenkel 4 befestigt. Auf dem Achsschenkel 4 ist ein Wälzlager 5 für eine Trommelnabe 6 angeordnet. Das Wälzlager stützt sich auf der Innenseite an einem Bund 7 der Trommelnabe 6 und an der Außenseite an einem in die Trommelnabe 6 eingelassenen Sprengring 8 ab. Dadurch bilden das Wälzlager 5 und die Trommelnabe 6 eine Konstruktionseinheit.

Zwischen dem Wälzlager 5 und dem Lenker 3 sind auf dem Achsschenkel 4 eine Distanzhülse 9 und ein Bremsträgerschild 10 angeordnet. Im Bremsträgerschild 10 sind Bohrungen 11 angeordnet, welche am Lenker 3 in angeformte Zapfen 12 übergreifen.

Der Achsschenkel 4 ist auf seiner Innenseite mit einem Kopf 13 versehen, der sich mit einer Abflachung 14 an einem Vorsprung 15 des Lenkers 3 abstützt.

Die axiale Fixierung der aus dem Wälzlager 5 und der Trommelnabe 6 bestehenden Konstruktionseinheit, der Distanzhülse 9 und des Bremsträgerschildes 10 auf dem Achsschenkel 4 erfolgt mittels einer Radmutter 16, die mit einem angeformten Bund 17 dem Wälzlager 5 anliegt. Auf diese Weise kann mit der Länge der Distanzhülse 9 die Lage des Wälzlagers 5 und damit auch der Trommelnabe 6 auf dem Achsschenkel 4 bestimmt werden.

Auf der Außenseite ist die Radlagereinheit mit einer in die Trommelnabe 6 eingeschnappten Radkappe 18 abgedichtet. Auf der Innenseite ist der zwischen der Trommelnabe 6 und dem Bremsträgerschild 10 freibleibende Spalt mit einem profilierten Abdeckblech 19 abgedeckt.

### Bezugszeichenliste

- 1: Torsionsfederachse
- 2: Führungsrohr
- 3: Lenker
- 4: Achsschenkel
- 5: Wälzlager
- 6: Trommelnabe
- 7: Bund
- 8: Sprengring
- 9: Distanzhülse
- 10: Bremsträgerschild
- 11: Bohrungen
- 12: Zapfen
- 13: Kopf
- 14: Abflachung
- 15: Vorsprung
- 16: Radmutter
- 17: Bund
- 18: Radkappe
- 19: Abdeckblech

## Patentansprüche

1. Torsionsfederachse für Anhängerfahrzeuge mit einem an einem Achsrohr schwenkbar gelagerten Lenker (3) für ein Rad, wobei in einem Lagerauge des Lenkers (3) ein Achsschenkel (4) für ein Wälzlager (5) mit darauf gelagerter Trommelnabe (6) und zum Befestigen eines Bremsträgerschildes (10) befestigt und auf dem freien Ende des Achsschenkels (4) eine Radmutter (11) zur axialen Fixierung dieser Bauteile angeordnet ist,
**dadurch gekennzeichnet,**
daß der Achsschenkel (4) mit einem Pressitz in ein Lagerauge des Lenkers (3) eingedrückt und am Kopf (13) mit einer Abflachung (14) gegen einen Vorsprung (15) am Lenker (3) gegen Drehung fixiert ist,
daß zwischen dem Wälzlager (5) und dem Bremsträgerschild (10) eine Distanzhülse (9) angeordnet ist und
daß das Bremsträgerschild (10) mit Bohrungen (11) auf Zapfen (12) des Lenkers (3) gegen Drehung fixiert ist.

2. Torsionsfederachse nach Anspruch 1, dadurch gekennzeichnet, daß im Bremsträgerschild (10) drei um einen Winkel von 120° gegeneinander versetzte Bohrungen (11) angeordnet sind.

3. Torsionsfederachse nach Anspruch 1, dadurch gekennzeichnet, daß an den Lenker (3) beiderseits des Vorsprunges (15) je ein Zapfen (12) angeformt ist.

4. Torsionsfederachse nach Anspruch 1, dadurch gekennzeichnet, daß an die Radmutter (16) ein Bund (17) angeformt ist, welcher dem Wälzlager (5) anliegt.

## Claims

1. Torsion bar axle for trailer vehicles with a suspension link (3), mounted pivotably on an axle tube, for a wheel, a stub axle (4) for a rolling-contact bearing (5) with a drum hub (6) mounted thereon being secured in a bearing eye of the suspension link (3) and secured in order to secure a brake anchor plate (10), and a wheel nut (16) being arranged on the free end of the stub axle (4) to fix these components axially, characterized in that the stub axle (4) is press-fitted into a bearing eye of the suspension link (3) and is fixed against rotation at the head (13) by a flap (14), against a projection (15) on the suspension link (3), in that a distance sleeve (9) is arranged between the rolling-contact bearing (5) and the brake anchor plate (10) and
in that the brake anchor plate (10) is fixed against rotation on the stud (12) of the suspension link (3) by means of holes (11).

2. Torsion bar axle according to Claim 1, characterized in that three holes (11) offset by an angle of 120° relative to one another are arranged in the brake anchor plate (10).

3. Torsion bar axle according to Claim 1, characterized in that a stud (12) is formed integrally on the suspension link (3) on both sides of the projection (15).

4. Torsion bar axle according to Claim 1, characterized in that a collar (17), which rests against the rolling-contact bearing (5), is formed integrally on the wheel nut (16).

## Revendications

1. Essieu à barre de torsion destiné à une remorque, comportant une biellette (3) montée de manière à pouvoir osciller sur un tube d'essieu pour supporter une roue, une fusée (14) d'essieu étant fixée à l'intérieur d'un oeillet de positionnement de la biellette (3) pour recevoir un palier (5) à roulement sur lequel est monté un moyeu de tambour (6) et pour fixer à demeure un plateau (10) de support de frein, et un écrou (11) de roue agencé à l'extrémité libre de la fusée (4) d'essieu pour bloquer de manière axiale cet agencement,
caractérisé en ce que
la fusée (4) d'essieu est insérée de force et ajustée serrée dans l'oeillet de positionnement de la biellette (3) et est bloqué en rotation par butée d'un méplat (14) situé au niveau de sa tête (13) contre un épaulement (15) de la biellette (3),
une douille d'écartement (10) est agencée entre le palier (5) à roulement et le plateau (10) de support de frein
le plateau (10) de support de frein, comportant des alésages (11), est bloqué en rotation sur des goujons (12) de la biellette (3).

2. Essieu à barre de torsion selon la revendication 1, caractérisé en ce que trois alésages (11) décalés d'un angle de 120° respectivement sont agencés sur le plateau (10) de support de frein.

3. Essieu à barre de torsion selon la revendication 1, caractérisé en ce que de chaque côté de l'épaulement (15) de la biellette (3) est formé venu de matière un goujon (12).

4. Essieu à barre de torsion selon la revendication 1, caractérisé en ce qu'une collerette (17) est formée sur l'écrou (16) de roue, celle-ci assurant le positionnement du palier (5) à roulement.
